Europäisches Patentamt

(19) European Patent Office

Office européen des brevets

(11) Publication number: 0 244 371
A2

## (12) EUROPEAN PATENT APPLICATION

(21) Application number: 87830155.5

(22) Date of filing: 23.04.87

(51) Int. Cl.³: B 62 D 21/08

(30) Priority: 29.04.86 IT 4795986

(43) Date of publication of application:
04.11.87 Bulletin 87/45

(84) Designated Contracting States:
AT BE CH DE ES FR GB GR LI LU NL SE

(71) Applicant: JANUS BUS S.P.A.
Via Casilina 98
I-00182 Rome(IT)

(72) Inventor: Rampini, Franco
Rampini Carlo S.p.a Zona Industriale
I-06065 Passignano sul Trasimeno Perugia(IT)

(72) Inventor: Rampini, Stefano
Rampini Carlo S.p.a Zona Industriale
I-06065 Passignano sul Trasimeno Perugia(IT)

(74) Representative: de Simone, Domenico et al,
Ing. Barzanò & Zanardo Roma S.p.A. Via Piemonte 26
I-00187 Roma(IT)

(54) A nerwork structure for a bus chassis, particulary suitable for airport service buses.

(57) A network structure for a bus chassis, in particular for airport service buses, said structure comprising a pair of closed truss-centres (6) for each one of the openings (3, 3', 4, 4', 5) provided laterally in the body sides; at least two longitudinal members (9, 10) on the floor (7) which are joined by first transverse members (8) which are interposed in a parallel direction to said pairs of closed truss-centres (6); first vertical and horizontal members arranged on the body sides (11) and interconnected to each other and to the vertical members of said closed truss-centres (6) by means of first reinforcement diagonal members (10); two wheelhouse zones (25) for each one of said body sides, said zones being each one made up of second vertical (27) and horizontal (26) members as well as of second reinforcement diagonal members (28); two upper lateral beams (15, 16, 17) defining the roof (14) which are connected by trusses (18) parallel to the upper side of said closed truss-centres (6) and joined to each other through longitudinal members (20) and third diagonal members (19); and two open truss-centres (21) in a position which is transverse and central on said roof (14) for supporting the motor and the relative equipment; the two head parts (22) of said structure being each one provided with an opening (23) for the entrance/exit door and with a seat for housing a overhanging or an inner driver's cab in a position which is symmetrical with respect to the longitudinal axis of the structure.

EP 0 244 371 A2

Croydon Printing Company Ltd.

A NETWORK STRUCTURE FOR A BUS CHASSIS, PARTICULARLY
SUITABLE FOR AIRPORT SERVICE BUSES

The present invention relates to a network structure for a bus chassis, in particular for airport service buses. More precisely, the present invention relates to a network structure that is so realized as to allow a completely free flow in the longitudinal direction through the bus to occur as such structure is so realized as to have the floor plane on which passengers tread completely free except for the wheelhouse zones.

As is well known, airport service buses are realized according to quite different ways by means of which it has been attempted at obtaining a vehicle which is more and more suitable for satisfying the requirements of the service intended in the natural development of technological applications.

The main efforts are toward the realization of buses which, in addition to the largest possible space available inside, also have the characteristic of making the approach operation to the airport facilities and to the aircraft easier at the utmost extent.

However, all solutions suggested up to the present time have not been realized so as to have a free floor plane on which passengers can tread and which is fully practicable in the longitudinal direction, so that, by arranging the driver's cabs symmetrically with respect to the longitudinal axis on the two fronts of the bus, it is possible to obtain a direct approach both to the aircraft and to the airport facilities or buildings avoiding any kind of maneuver.

The network structure of the bus chassis according to the present invention has been particularly studied for satisfying such requirements so as to allow a functional bus to be realized in a particularly advantageous way.

It is an object of the present invention to supply a network structure that is so realized as to have the bus floor on which passengers can tread at the lowest possible level and mainly of uniform height, i.e. with no difference in height.

It is a further object of the present invention to realize a network structure so that the motor can be provided on the roof of the vehicle and the longitudinal flow of passengers can be realized accordingly.

It is a further object of the present invention to realize a network structure on which the driver's cabs are provided at a position which is symmetrical over the two head parts, such cabs being overhanging or not, and the entrance/exit doors are provided so as to obtain the desired longitudinal flow of users and to avoid dangerous maneuvers alongside.

It is a further object of the present invention to provide the housing for independent wheels suspensions again aiming at realizing a floor plane with no differences in height and at the lowest possible height over the ground.

To attain that object, the present invention suggests a basic technical teaching for realizing a closed, truss-centre network structure mainly consisting of a perfectly planar floor, of two body sides contributing to the absorption of torsional strains, on which sides the lateral emergency doors and the windows are provided, said network structure consisting also of a roof on which the motor is housed and which forms the main absorption member of torsional strains, as well as of wheelhouses of such a height as not to obstruct completely the possibility of partitioning inside the vehicle, and of the head parts on which the driver's cabs are provided, said cabs being overhanging or not, and the entrance/exit doors are also provided.

Accordingly, it is a specific object of the present invention a network structure for a bus chassis, which is particularly suitable for airport service buses and comprises a pair of closed truss-centres for each one of the openings provided laterally on the body sides; at least two longitudinal members on the floor which are joined by first transverse members interposed in a parallel direction to said pairs of closed truss-centres; first vertical and horizontal members arranged on the body sides and interconnected to each other and to the vertical members of said closed truss-centres by means of first reinforcement diagonal members; two wheelhouse zones for each one of said body sides, said zones consisting each one of second vertical and horizontal members as well as of second reinforcement diagonal members; two upper lateral beams defining the roof which are connected by trusses parallel to the upper side of said closed truss-centres and connected to each other through longitudinal members and third diagonal members; and two open truss-centres at a central transverse position on said roof, for supporting the motor and the relative equipment; each one of the two head parts of said structure being provided with an opening for the entrance/exit door and with a seat for housing the driver's cab at a position which is symmetrical with respect to the longitudinal axis of the structure, said cab being overhanging or mounted inside.

Preferably, further reinforcement diagonal members are provided between said at least two longitudinal members and said transverse members of said plane floor.

All the reinforcement diagonal members mentioned above are supplied in order to reduce to a minimum value the strains that the structure undergoes.

As already mentioned above, two transverse closed truss-centres willbe provided for each opening, be it an emergency door or a window. The length of the network structure according to the present invention stems from that, as a function of the number provided.

According to the preferred embodiment of the structure according to the present invention the opening for a central window is provided on each body side, the opening for a service door as well as the opening for the window above the wheelhouse and the opening for the lateral window are all arranged at the sides of said central window, in.succession on both sides.

Preferably according to the present invention the vertical uprights of the closed truss-centres have a first vertical length and a second length, above the first and longer than said first part, converging towards the roof.

Further according to the present invention said two upper lateral beams can each one be made up of an upper tube and of a lower tubular member which are joined vertically by connection plates.

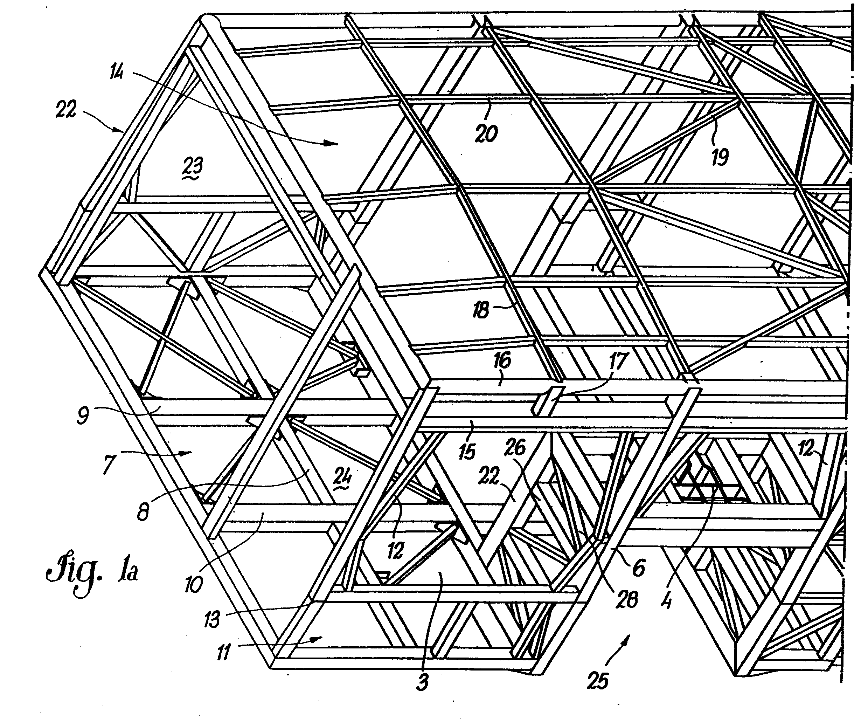

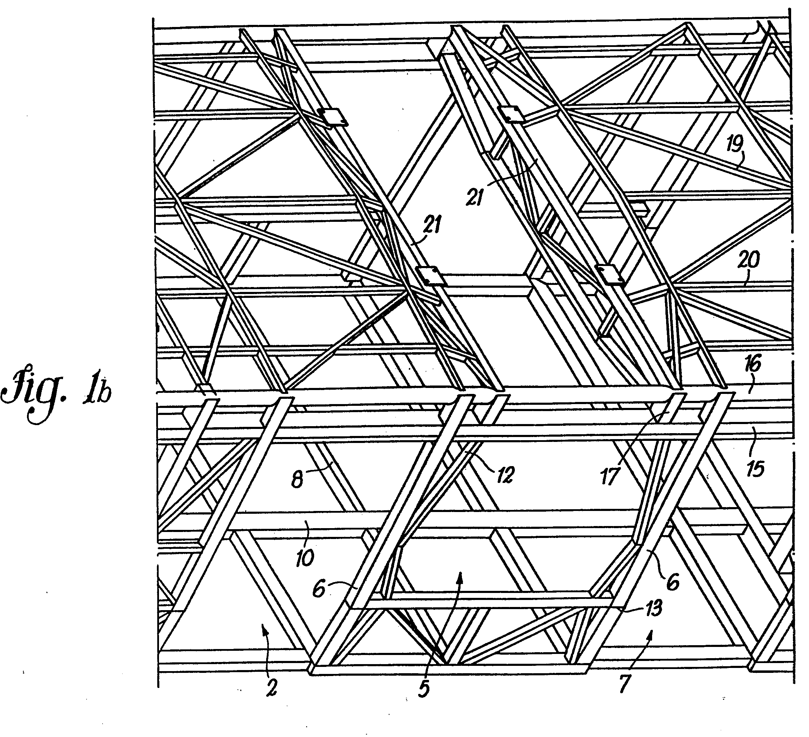

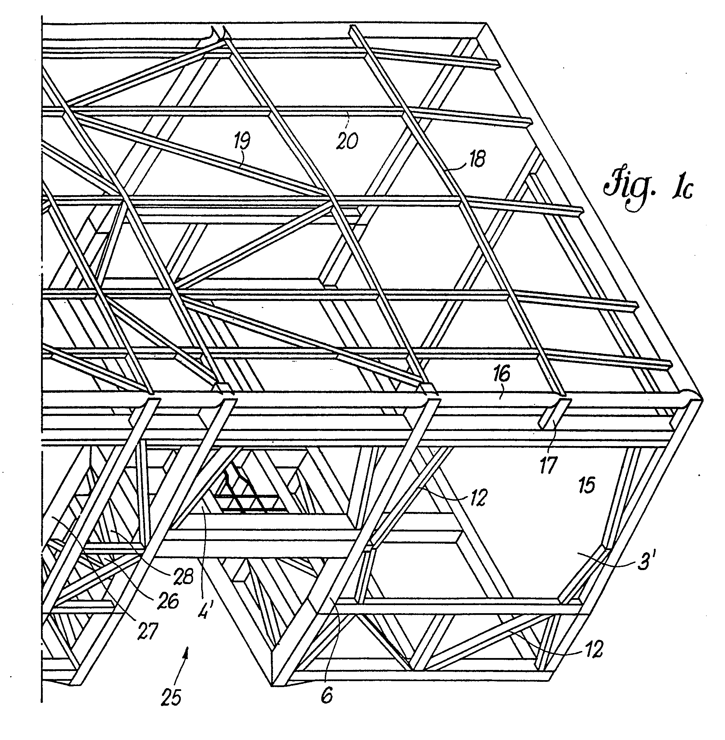

The present invention will be disclosed in the following for illustrative and not for limitative purposes with particular reference to Figures 1a, 1b and 1c of the enclosed drawings wherein a perspective view of an embodiment of the network structure of the present invention is shown.

As can be observed in the Figures, two transverse closed truss-centres 6 are arranged for each one of the emergency doors 1 and 2, of the lateral windows 3, 3' and 4, 4' and of the central window 5, or anyway for each opening provided along the lateral sides of the structure according to the present invention.

Turning now the attention to the plane floor of the structure, which floor is generally pointed out by the reference number 7, it can be observed that the number of transverse members 8 provided is higher than that of said truss-centres 6. More particularly, said members 8 are provided between two truss-centres 6 which are contiguous and spaced from one another by a particularly wide span as is the case with the two truss-centres 6 delimiting the central window 5.

The transverse members 8 have to satisfy the task, in the cases mentioned above, of limiting the deflection. In the longitudinal direction, the floor 7 comprises the two longitudinal members 9 and 10.

The realization of the floor 7 according to such criterion allows a perfectly flat surface to be obtained, with no depressions and no projecting parts, if the two zones are excluded which are immediately behind the driver's cabs where various components and some equipment are housed below a number of seats, such as for instance accumulators or batteries, tanks, the electric system, and so on. Obviously, as the Figures show the structure according to the invention with no auxiliary equipment, said equipment is not shown in the enclosed drawings.

The body sides 11 have such a structural geometry as to contribute to the elimination of the flexion strains of the whole system.

More particularly, said body sides are made up of said truss-centres 6 which are reinforced by the diagonals 12 which are so realized as to reduce to the minimum value the free deflection length of the vertical rods of said truss-centres 6 so that the desired result of a reduction in the torsional strains is obtained.

As can be observed in the Figures of the enclosed drawings, the line of said truss-centres 6 shows a breaking in the geometric continuity at the point indicated with the reference number 13, so that a slight convergency of the body sides 11 toward the roof 14 is obtained.

The roof 14 is the detail of the structure according to the present invention that has to satisfy the task of absorbing the torsional strains, though cooperatively with said body sides 11.

Said roof 14 is designed as a suspension girder having a very high inertia.

Practically such roof 14 consists of a three-dimensional network structure whose two lateral beams comprise, each one of them, a tube 15 and a tubular part 16 connected by the plates 17, said two lateral beams being arranged at the two sides of the structure and connected by the trusses 18 which are parallel to the truss-centres 6.

Said trusses 18 are reinforced by the diagonal members 19 and are connected longitudinally by means of the members 20. The two truss-centres 21, which are open for supporting the heat engine and the relative equipment and components, are provided at the central position so as to be exactly symmetrical with respect to the structure of the present invention. Thus, an upper surface of the roof 14 is obtained on which it is possible to tread freely to its full extent.

The two head parts 22 of the network structure according to the present invention are perfectly symmetric. The opening 23 for the entrance/exit door and the seat 24 for obtaining the overhanging or inner driver's cab are provided on each one of the same.

The wheelhouses 25 are provided on each one of the body sides 11, said wheelhouses having such a structure, also because of the adoption of the particular kind of suspension which is the object of the Italian Patent Application 47958-A/86 in the name of the same Applicant, as not to obstruct totally the visual continuity from end to end inside the vehicle.

Said wheelhouses 25 are made up of a network structure comprising the transverse members 26, the vertical members 27 and the diagonal members 28 that avoid both the flexion and the torsion strains.

Housings will be provided on said wheelhouses 25 for anchoring, the suspensions of the elastic member, of the shock absorber and of the reaction strut of the suspension type mentioned above, said housing being not shown in the drawing.

The present invention has been disclosed for illustrative but not for limitative purposes according to some preferred embodiments of the same, but it is to be understood that modifications and changes can be introduced by those who are skilled in the art without departing from the spirit and scope of the invention for which a priority right is claimed.

## CLAIMS

1. A network structure for a bus chassis, particularly suitable for airport service buses, said structure being characterized in that it comprises a pair of closed truss-centres for each one of the openings provided laterally on the body sides; at least two longitudinal members on the plane floor which are joined by first transverse members interposed in a parallel direction to said pairs of closed truss-centres; first vertical and horizontal members arranged on the body sides and interconnected to each other and to the vertical members of said closed truss-centres by means of first reinforcement diagonal members; two wheelhouse zones for each one of said body sides, said zones being each one made up of second vertical and horizontal members as well as of second reinforcement diagonal members; two upper lateral beams delimiting the roof which are connected by trusses parallel to the upper side of said closed truss-centres and connected to each other through longitudinal members and third diagonal members; and two open truss-centres at a central transverse position on said roof for supporting the motor and the relative equipment; the two head parts of said network structure being each one provided with an opening for the entrance/exit door and with a seat for housing the driver's cab at a position which is symmetrical with respect to the longitudinal axis of the structure, said driver's cab being overhanging or mounted inside.

2. A network structure according to claim 1, characterized in that further reinforcement diagonal members are provided between said at least two longitudinal members and said transverse members of the plane floor.

3. A network structure according to claim 1, characterized in that an opening for a window is provided on each body side at a central position, at the sides for which opening the openings are also provided successively on both sides for a service door, for a window above the wheelhouse and for a lateral window.

4. A network structure according to claim 1, characterized in that said closed truss-centres comprises vertical uprights having a first vertical length and a second length which is above the first and longer than the same, and converges toward the roof.

5. A network structure according to claim 1, characterized in that said two upper lateral beams of the roof are each one made up of an upper tube and a lower tubular member which are joined vertically by connection plates.

6. A network structure for a bus chassis, which is particularly suitable for airport service buses, according to each one of the preceding claims and substantially as illustrated and disclosed above.

Fig. 1a

fig. 1b

0244371

Fig. 1c